# EUROPEAN PATENT SPECIFICATION

(11) **EP 3 249 234 B1**
(45) Date of publication and mention of the grant of the patent: **31.07.2019**
(21) Application number: 17167437.7
(22) Date of filing: 20.04.2017
(51) Int. Cl.: F02B 37/10, F04D 25/04, F04D 25/06, F02C 6/12, F04D 25/02, F02B 39/10, F02B 37/013, F04D 17/12, F02B 33/40, F02B 37/22, F02B 39/00

(54) **TURBOCHARGER WITH TWO-STAGE SERIES COMPRESSOR DRIVEN BY EXHAUST GAS-DRIVEN TURBINE AND ELECTRIC MOTOR**
TURBOLADER MIT ZWEISTUFIGEM, VON EINER ABGASBETRIEBENEN TURBINE UND VON EINEM ELEKTROMOTOR ANGETRIEBENEM, SERIENVERDICHTER
TURBOCOMPRESSEUR AVEC COMPRESSEUR À DEUX ÉTAGES EN SÉRIE ENTRAÎNÉ PAR TURBINE À GAZ D'ÉCHAPPEMENT ET MOTEUR ÉLECTRIQUE

(30) Priority: 22.05.2016 US 201662339922 P; 24.03.2017 US 201715468162
(43) Date of publication of application: 29.11.2017
(73) Proprietor: Garrett Transportation I Inc., Torrance, CA 90504 (US)
(72) Inventor: DONKIN, Gavin, Morris Plains, NJ New Jersey 07950 (US)
(74) Representative: LKGLOBAL Lorenz & Kopf PartG mbB Patentanwälte

(56) References cited:
- EP-A1- 3 242 002
- WO-A1-2010/081123
- WO-A2-2009/087273
- CN-A- 104 763 648

## Description

### BACKGROUND

The present disclosure relates to exhaust gas-driven turbochargers that include an electric motor for providing supplementary motive power to the compressor.

Electric motor-driven turbochargers ("e-turbochargers") face compromises in two respects. First, electric motors are mechanically challenged to run at the high speeds that turbochargers typically operate at, and accordingly it is frequently necessary to compromise the aerodynamic design of the compressor so that the compressor can operate at a lower speed in order for the electric motor to be able to survive. Alternatively, expensive motor technology is required in order to survive the high speeds.

Second, the compressor map width, which is the difference between the surge line and the choke line, is often a limiting factor in how the engine and turbocharger can be operated. With an e-turbo, this issue is exacerbated because when the motor is powered, the operating pressure ratio at a given engine speed is increased, thus pushing the compressor into surge.

Reference is made to WO 2010/081123 A1, which discloses an electrically controlled turbocharger according to the preamble of claim 1, and that has a motor mounted on a shaft in a motor housing between a turbine and compressor. Oil is sprayed onto the motor stator to cool the stator. In the case of a single shaft, a shaft stiffener is placed between the motor rotor and the shaft. Several arrangements of ECTs are discussed with single and concentric shafts as well as single and dual stages of compressors and turbines. Lubrication arrangements involve overcoming the centrifugal forces present in rotating shafts.

WO2009087273 A2 discloses another electrically controlled turbocharger of the prior art.

### BRIEF SUMMARY OF THE DISCLOSURE

The present disclosure describes embodiments of an e-turbocharger having features that substantially mitigate the above-noted drawbacks of previous e-turbochargers. In accordance with the present invention, an e-turbocharger according to claim 1 is provided, which comprises a two-stage series compressor comprising a compressor housing assembly, and a compressor wheel comprising a first impeller and a second impeller that are mounted on a shaft for rotation therewith, the first and second impellers being contained in the compressor housing assembly, the compressor housing assembly defining a first compressor flow path including a first air inlet that leads air into the first impeller, a first volute that collects compressed air that has passed through and been compressed by the first impeller, a second compressor flow path including a second air inlet that leads air into the second impeller, and a second volute that collects compressed air that has passed through and been compressed by the second impeller, and further comprising an interstage duct that connects the first volute to the second air inlet such that air compressed by the first impeller is led by the interstage duct from the first volute into the second air inlet and is further compressed by the second impeller and delivered into the second volute.

The turbocharger further comprises an exhaust gas-driven turbine comprising a turbine housing defining an axial bore therein and a turbine wheel affixed to the shaft and contained in the axial bore of the turbine housing, the turbine housing defining a generally annular chamber arranged to receive exhaust gas, and a nozzle arranged to feed exhaust gas from the chamber generally radially inwardly to the turbine wheel, exhaust gas being discharged from the turbine housing via the axial bore.

The turbocharger further includes a center housing disposed between the compressor housing assembly and the turbine housing, the center housing containing one or more bearings for the shaft. In accordance with the invention, the turbocharger further comprises an electric motor comprising a generally annular motor stator concentrically surrounding a motor rotor, the motor rotor being affixed to the shaft, wherein energizing of the electric motor rotatably drives the motor rotor so as to assist the turbine wheel in rotatably driving the two-stage series compressor.

In accordance with the invention, coupling a two-stage series compressor with an electric motor mitigates the above-noted drawbacks of previous e-turbochargers that employ single-stage compression. A two-stage series compressor can achieve the desired pressure ratios at a lower speed than a single-stage compressor, and accordingly the severe mechanical challenges presented to the electric motor are substantially mitigated.

The present disclosure describes various embodiments of the invention. The first and second impellers can be arranged in a back-to-back configuration.

The electric motor includes a motor housing containing the motor stator and the motor rotor, the motor housing defining coolant passageways for circulating a liquid coolant therethrough to cool the electric motor. In one embodiment an integral one-piece housing member forms both the center housing and the motor housing.

According to the invention, the compressor housing assembly comprises a first compressor housing containing the first impeller and defining the first volute, and a separately formed second compressor housing containing the second impeller and defining the second volute, and the electric motor is disposed between the first compressor housing and the second compressor housing. The electric motor includes a motor housing containing the motor stator and the motor rotor, the motor housing being attached to the first compressor housing and to the second compressor housing. The motor housing can define coolant passageways for circulating a liquid coolant therethrough to cool the electric motor.

In an embodiment the first compressor housing and first impeller can be arranged for air to enter the first impeller in a first axial direction, and the second compressor housing and second impeller can be arranged for air to enter the second impeller in a second axial direction that is opposite to the first axial direction.

In an example which is not part of the invention, the electric motor is disposed upstream of the two-stage series compressor with respect to an axial direction in which air enters the first impeller. The shaft has a portion that extends upstream of the first impeller, and the motor rotor is mounted on said portion of the shaft. There is an annular space disposed between the motor stator and the motor rotor, and said annular space forms part of an air inlet through which air passes in said axial direction to enter the first impeller.

The exhaust gas-driven turbine in any or all of the embodiments can include a variable-nozzle assembly. As a non-limiting example, the variable-nozzle assembly can comprise an array of vanes disposed in the nozzle, the vanes being variable in setting angle for regulating exhaust gas flow into the turbine wheel.

### BRIEF DESCRIPTION OF THE SEVERAL VIEWS OF THE DRAWING(S)

Having thus described the present disclosure in general terms, reference will now be made to the accompanying drawings, which are not necessarily drawn to scale, and wherein:
FIG. 1 is an axial cross-sectional view of a turbocharger in accordance with a first non-claimed example;
FIG. 2 is an axial cross-sectional view of the turbocharger of FIG. 1 but taken on a different plane such that the interstage duct can be seen;
FIG. 3 is an axial cross-sectional view of the only presented turbocharger which is in accordance with an embodiment of the invention;
FIG. 4 is an axial cross-sectional view of a turbocharger in accordance with a second non-claimed example; and
FIG. 5 is an axial cross-sectional view of a turbocharger in accordance with a third non-claimed example.

### DETAILED DESCRIPTION OF THE DRAWINGS

The present invention now will be described more fully hereinafter with reference to the accompanying drawings in which some but not all embodiments of the invention are shown. Indeed, aspects of the invention may be embodied in many different forms within the scope of the appended claims and should not be construed as limited to the embodiments set forth herein; rather, these embodiments are provided so that this disclosure will satisfy applicable legal requirements. Like numbers refer to like elements throughout.

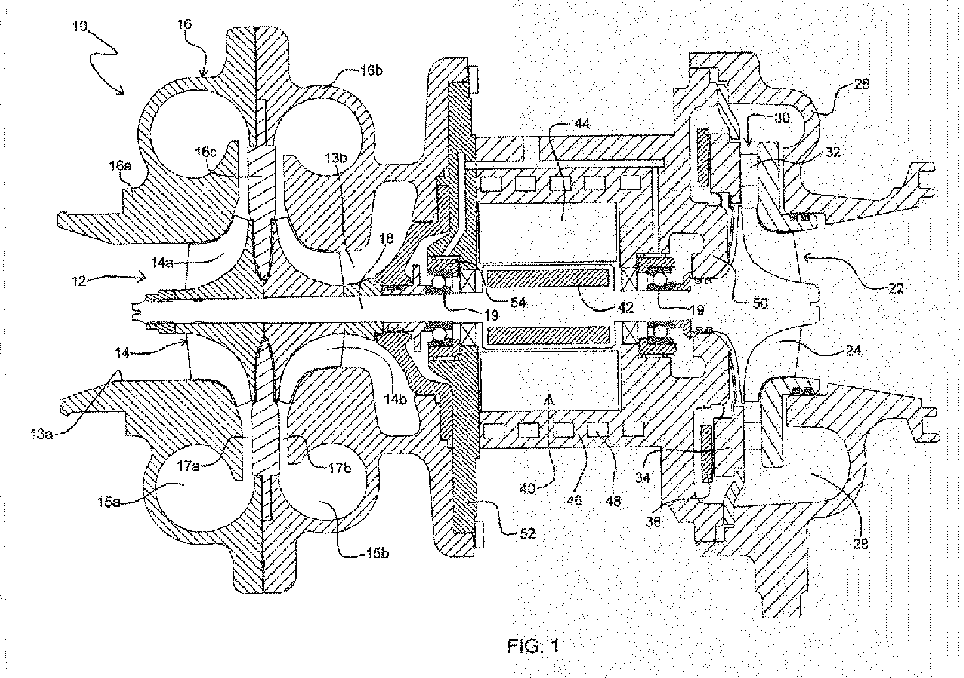

FIG. 1 illustrates an axial cross-sectional view of a turbocharger 10 in accordance with a first non-claimed example. The turbocharger includes a compressor **12** rotatably driven by an exhaust gas-driven turbine **22.** The compressor **12** comprises a compressor wheel **14** affixed to a shaft **18** for rotation therewith. The compressor wheel is contained within a compressor housing assembly **16.** The compressor wheel **14** is a twin-impeller wheel having a first impeller **14a** and a second impeller **14b.** In the illustrated example, the first and second impellers are arranged in a back-to-back configuration such that air enters the first impeller **14a** in an axial first direction (left-to-right in FIG. 1) and air enters the second impeller **14b** in a second axial direction (right-to-left in FIG. 1) that is opposite to the first direction. The two impellers can instead be oriented in the same manner such that air enters each in the same axial direction.

The compressor housing assembly **16** in the illustrated example comprises a first compressor housing **16a** containing the first impeller **14a** and a second compressor housing **16b** containing the second impeller **14b.** The first compressor housing **16a** defines a first air inlet **13a** for the first impeller, and also defines a first volute **15a** that receives air that has passed through the first impeller and has been pressurized in a first stage of the two-stage compression process provided by the twin-impeller arrangement. The compressor housing assembly **16** also defines a first diffuser **17a** through which air pressurized by the first impeller **14a** is led radially outwardly and is diffused to a lower velocity and higher static pressure before it enters the first volute **15a.**

The compressor housing assembly **16** further defines a second air inlet **13b** for the second impeller **14b,** a second volute **15b** that receives air pressurized by the second impeller, and a second diffuser **17b** that diffuses the air pressurized by the second impeller and discharges it into the second volute. In the illustrated example, the compressor housing assembly comprises a separately formed, generally annular disk **16c** disposed between the first compressor housing **16a** and the second compressor housing **16b.** One face of the disk **16c** forms a wall of the first diffuser **17a** and an opposite face of the disk forms a wall of the second diffuser **17b.**

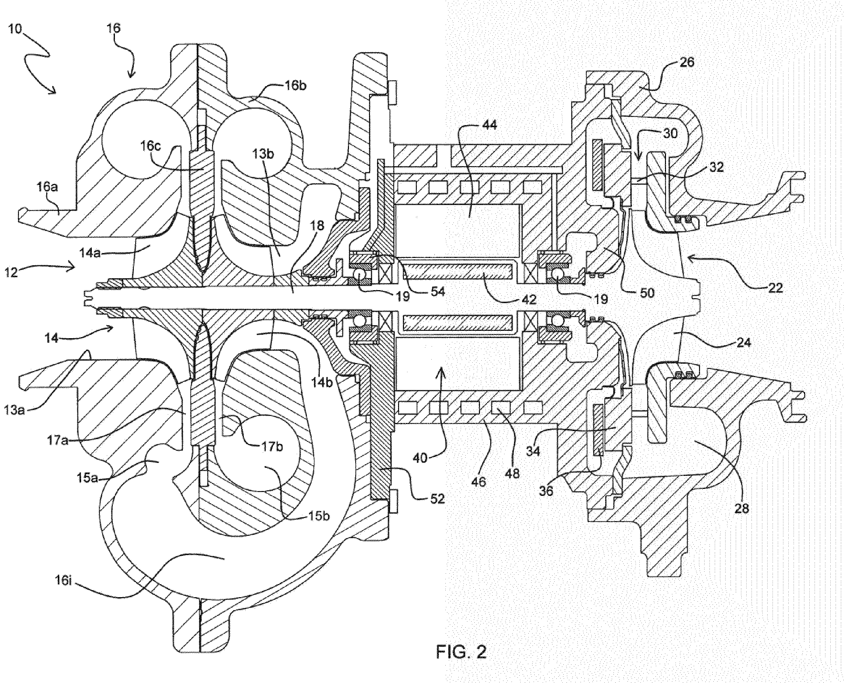

As shown in FIG. 2, the compressor housing assembly **16** further includes an interstage duct **16i** that leads from the first volute **15a** into the second air inlet **13b** for the second impeller **14b.** Thus, air that has been partially pressurized by the first impeller **14a** is routed from the first volute **15a** through the interstage duct **16i** into the second air inlet **13b,** and is further pressurized by the second impeller in a second stage of the two-stage compression process and is delivered into the second volute **15b** for supply to the intake of an internal combustion engine.

Turning to the turbine **22,** it comprises a turbine wheel **24** contained within a turbine housing **26.** The turbine housing defines an exhaust gas inlet (not visible in FIG. 1) that receives exhaust gas from an internal combustion engine, and a generally annular chamber **28** that receives the exhaust gas from the inlet and distributes the gas around the 360-degree annular chamber. The turbine includes a nozzle **30** that leads exhaust gas from the chamber **28** generally radially inwardly into the turbine wheel **24.** In the illustrated example, the nozzle **30** is a variable nozzle having an array of variable vanes **32** rotatably mounted to a nozzle ring **34** and caused to pivot about their respective axes by rotation of a unison ring **36** disposed on the opposite side of the nozzle ring from the vanes.

In the first example shown in FIG. 1, the turbocharger **10** includes an electric motor **40** disposed between the compressor **12** and the turbine **22.** The electric motor comprises a motor rotor **42** affixed to the shaft **18** and a generally annular motor stator **44** concentrically surrounding the motor rotor **42.** The motor stator is housed within a motor housing **46.** The motor housing defines one or more coolant passages **48** for circulating a liquid coolant to cool the motor.

The turbocharger **10** also includes a center housing **50** that contains one or more bearings **19** as well as shaft seals for the shaft **18.** In the embodiment of FIG. 1, the center housing **50** and the motor housing **46** are both formed by portions of an integral one-piece housing member, and the center housing contains one of two bearings **19** for the shaft. The other bearing **19** is held by an assembly comprising a generally annular bearing plate **52** and bearing carrier **54.** The assembly of the bearing plate and bearing carrier is fastened between the motor housing **46** and the second compressor housing **16b.**

The electric motor **40** will run on demand where the operating speed and boost pressure are lower than demanded speed/boost. These operating conditions mainly occur at low engine speeds and/or when changing from low load to increased load conditions. When the electric motor is not being powered to supply motive power to the shaft **18** of the turbocharger, the electric motor can operate as a generator to produce electrical power that can be used for various purposes in the vehicle, such as helping to charge a battery.

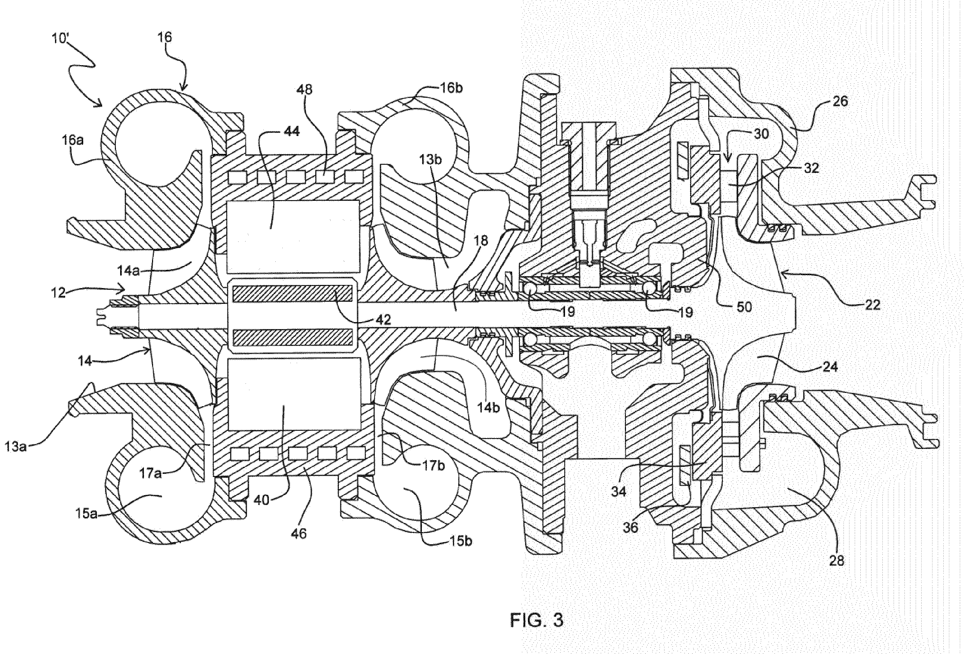

A turbocharger **10'** in accordance with an embodiment of the invention is illustrated in FIG. 3. The turbocharger **10'** is similar in many respects to the turbocharger 10 described above, and accordingly the present description will focus primarily on those aspects of the turbocharger **10'** that differ from the first example. In accordance with this embodiment, the turbocharger **10'** includes a compressor **12** rotatably driven by an exhaust gas-driven turbine **22.** The compressor **12** comprises a compressor wheel **14** affixed to a shaft **18** for rotation therewith. The compressor wheel is contained within a compressor housing assembly **16.** The compressor wheel **14** is a twin-impeller wheel having a first impeller **14a** and a second impeller **14b.** In the illustrated embodiment, the first and second impellers are arranged in a back-to-back configuration such that air enters the first impeller **14a** in an axial first direction (left-to-right in FIG. 3) and air enters the second impeller **14b** in a second axial direction (right-to-left in FIG. 3) that is opposite to the first direction.

The compressor housing assembly **16** of this embodiment, according to the invention, comprises a first compressor housing **16a** containing the first impeller **14a** and a second compressor housing **16b** containing the second impeller **14b.** The first compressor housing **16a** defines a first air inlet **13a** for the first impeller, and also defines a first volute **15a** that receives air that has passed through the first impeller and has been pressurized in a first stage of the two-stage compression process provided by the twin-impeller arrangement. The compressor housing assembly **16** also defines a first diffuser **17a** through which air pressurized by the first impeller **14a** is led radially outwardly and is diffused to a lower velocity and higher static pressure before it enters the first volute **15a.**

The compressor housing assembly **16** further defines a second air inlet **13b** for the second impeller **14b,** a second volute **15b** that receives air pressurized by the second impeller, and a second diffuser **17b** that diffuses the air pressurized by the second impeller and discharges it into the second volute.

Similar to the arrangement shown in FIG. 2, the compressor housing assembly **16** further includes an interstage duct that leads from the first volute **15a** into the second air inlet **13b** for the second impeller **14b.** Thus, air that has been partially pressurized by the first impeller **14a** is routed from the first volute **15a** through the interstage duct into the second air inlet **13b,** and is further pressurized by the second impeller in a second stage of the two-stage compression process and is delivered into the second volute **15b** for supply to the intake of an internal combustion engine.

Turning to the turbine **22,** it comprises a turbine wheel **24** contained within a turbine housing **26.** The turbine housing defines an exhaust gas inlet (not visible in FIG. 3) that receives exhaust gas from an internal combustion engine, and a generally annular chamber **28** that receives the exhaust gas from the inlet and distributes the gas around the 360-degree annular chamber. The turbine includes a nozzle 30 that leads exhaust gas from the chamber 28 generally radially inwardly into the turbine wheel 24. In the illustrated embodiment, the nozzle 30 is a variable nozzle having an array of variable vanes 32 rotatably mounted to a nozzle ring 34 and caused to pivot about their respective axes by rotation of a unison ring 36 disposed on the opposite side of the nozzle ring from the vanes.

In the embodiment of the invention shown in FIG. 3, and according to the present invention, the turbocharger 10 includes an electric motor 40 disposed between the first impeller 14a and the second impeller 14b. More particularly, the electric motor comprises a motor housing 46 containing a motor stator 42 that surrounds a motor rotor 44 mounted on the shaft 18. The motor housing 46 is disposed between and fastened to the first compressor housing 16a and the second compressor housing 16b. The second compressor housing 16b is also fastened to one end of a center housing 50 that houses bearings 19 for the shaft 18. The other end of the center housing is fastened to the turbine housing 26. The motor housing 46 defines one or more coolant passages 48 for circulating a liquid coolant to cool the motor.

In this embodiment, the first diffuser 17a is bounded between a face of the first compressor housing 16a and an opposing face of the motor housing 46, and the second diffuser 17b is bounded between a face of the second compressor housing 16b and an opposing face of the motor housing 46.

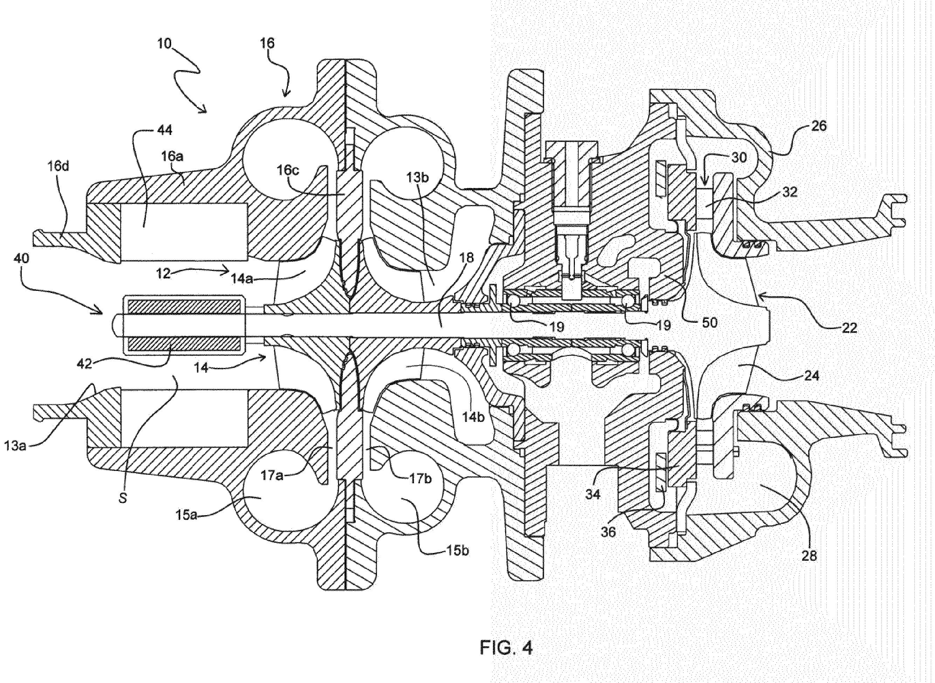

FIG. 4 illustrates a turbocharger 110 in accordance with a second non-claimed example. This example comprises many of the same or similar features as the first example and the embodiment of the invention, and accordingly the present description will focus primarily on those aspects that differ from the first example and the embodiment of the invention described above. The chief difference between the turbocharger 110 and the turbocharger 10 is that the motor 40 of the turbocharger 110 is disposed upstream (with respect to the axial direction in which air enters the first impeller 14a) of the compressor 12. The first compressor housing 16a also serves as a motor housing for containing the motor stator 44. The motor rotor 42 is mounted on a portion of the shaft 18 that projects upstream from the first impeller 14a. The first inlet 13a for the first impeller 14a may be defined by a separately formed cap or plug 16d that is inserted into the first compressor housing 16a after the motor stator 44 has been installed therein. The plug 16d is generally annular or ring-shaped so that air can enter through its central passage in an axial direction and proceed into the first impeller. There is an annular space S disposed between the motor stator **44** and the motor rotor **42,** and said annular space forms part of the air inlet through which air passes in the axial direction to enter the first impeller. The center housing **50** contains the bearings **19** for the shaft. In other respects the turbocharger **110** is substantially similar to the turbocharger **10** previously described.

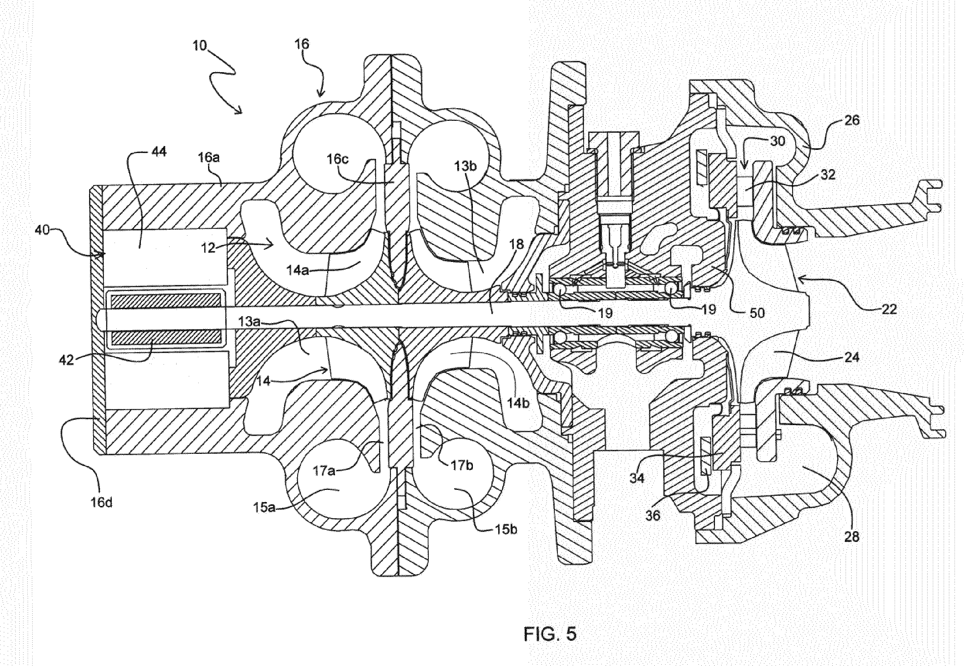

A turbocharger **210** in accordance with a third non-claimed example is now described with reference to FIG. 5. The turbocharger **210** is similar in many respects to the turbocharger **110,** the chief difference being the manner in which air enters the first impeller **14a.** The compressor housing assembly includes a cover **16d** that closes off the front opening in the first compressor housing **16a** such that the motor **40** is completely enclosed by the compressor housing assembly. Accordingly, air does not pass through the motor as in the above-described turbocharger **110.** Instead, the compressor housing assembly includes a first inlet **13a** that receives air via a conduit similar to the way that air is supplied to the second inlet **13b** via an interstage duct. In other respects the turbocharger **210** is substantially similar to the turbocharger **110** previously described.

Within the scope of the appended claims, many modifications and other embodiments of the inventions set forth herein will come to mind to one skilled in the art to which these inventions pertain having the benefit of the teachings presented in the foregoing descriptions and the associated drawings. For example, the invention can be practiced either with or without the use of an interstage cooler between the first and second compressor stages. Additionally, while back-to-back compressor impellers are illustrated in the drawings, the invention is not limited to such a configuration, and nose-to-tail compressor arrangements are within the scope of the invention. Furthermore, while the illustrated embodiments employ a variable-nozzle turbine, the invention is not limited to any particular turbine configuration; waste-gate and free-floating turbines can be used with the invention. Therefore, it is to be understood that the inventions are not to be limited to the specific embodiments disclosed and that modifications and other embodiments are intended to be included within the scope of the appended claims.

## Claims

1. A turbocharger (10) comprising:
a two-stage series compressor (12) comprising a compressor housing assembly (16), and a compressor wheel (14) comprising a first impeller (14a) and a second impeller (14b) that are mounted on a shaft (18) for rotation therewith, the first and second impellers being contained in the compressor housing assembly, the compressor housing assembly defining a first compressor flow path including a first air inlet (13a) that leads air into the first impeller, a first volute (15a) that collects compressed air that has passed through and been compressed by the first impeller in operation, a second compressor flow path including a second air inlet (13b) that leads air into the second impeller, and a second volute (15b) that collects compressed air that has passed through and been compressed by the second impeller in operation, and further comprising an interstage duct (16i) that connects the first volute to the second air inlet such that, in operation, air compressed by the first impeller is led by the interstage duct from the first volute into the second air inlet and is further compressed by the second impeller and delivered into the second volute;
an exhaust gas-driven turbine (22) comprising a turbine housing (26) defining an axial bore therein and a turbine wheel (24) affixed to the shaft and contained in the axial bore of the turbine housing, the turbine housing defining an exhaust gas inlet for receiving exhaust gas, a generally annular chamber (28) arranged to receive exhaust gas from the exhaust gas inlet, a nozzle arranged to feed exhaust gas from the chamber generally radially inwardly to the turbine wheel, exhaust gas being discharged, in operation, from the turbine housing via the axial bore;
a center housing (50) disposed between the compressor housing assembly and the turbine housing, the center housing containing one or more bearings for the shaft; and
an electric motor (40) comprising a generally annular motor stator (44) concentrically surrounding a motor rotor (42), the motor rotor being affixed to the shaft, wherein energizing of the electric motor rotatably drives the motor rotor so as to assist the turbine wheel in rotatably driving the two-stage series compressor, wherein:
the compressor housing assembly comprises a first compressor housing (16a) containing the first impeller and defining the first volute, and a separately formed second compressor housing (16b) containing the second impeller and defining the second volute,
**characterized in that** the electric motor is disposed between the first compressor housing and the second compressor housing.

2. The turbocharger of claim 1, wherein the electric motor includes a motor housing (46) containing the motor stator and the motor rotor, the motor housing being attached to the first compressor housing and to the second compressor housing.

3. The turbocharger of claim 2, wherein the motor housing defines coolant passageways (48) for circulating a liquid coolant therethrough to cool the electric motor.

4. The turbocharger of claim 1, wherein the first compressor housing and first impeller are arranged for air to enter the first impeller in a first axial direction, and the second compressor housing and second impeller are arranged for air to enter the second impeller in a second axial direction that is opposite to the first axial direction.

5. The turbocharger of claim 1, wherein the exhaust gas-driven turbine includes a variable-nozzle assembly.

6. The turbocharger of claim 5, wherein the variable-nozzle assembly comprises an array of vanes (32) disposed in the nozzle, the vanes being variable in setting angle for regulating exhaust gas flow into the turbine wheel.

## Patentansprüche

1. Turbolader (10), der Folgendes aufweist:
einen zweistufigen Reihenverdichter (12), der eine Verdichtergehäuseanordnung (16) und ein Verdichterrad (14) mit einem ersten Laufrad (14a) und einem zweiten Laufrad (14b), die an einer Welle (18) zur Drehung darauf angebracht sind, aufweist, wobei das erste und das zweite Laufrad in der Verdichtergehäuseanordnung aufgenommen sind, wobei die Verdichtergehäuseanordnung einen ersten Verdichterströmungspfad mit einem ersten Lufteinlass (13a), der Luft in das erste Laufrad leitet, einen ersten Diffusor (15a), der verdichtete Luft aufnimmt, die im Betrieb durch das erste Laufrad passiert ist und durch dieses verdichtet wurde, einen zweiten Verdichterströmungspfad mit einem zweiten Lufteinlass (13b), der Luft in das zweite Laufrad leitet, und einen zweiten Diffusor (15b), der verdichtete Luft aufnimmt, die im Betrieb durch das zweite Laufrad passiert ist und durch dieses verdichtet wurde, definiert, und ferner aufweisend einen Zwischenstufendurchgang (16i), der den ersten Diffusor mit dem zweiten Lufteinlass derart verbindet, dass im Betrieb durch das erste Laufrad verdichtete Luft durch den Zwischenstufendurchgang von dem ersten Diffusor in den zweiten Lufteinlass geleitet wird und durch das zweite Laufrad weiter verdichtet und dem zweiten Diffusor zugeführt wird;
eine abgasbetriebene Turbine (22), die ein Turbinengehäuse (26), das eine axiale Öffnung darin definiert, und ein Turbinenrad (24), das an der Welle befestigt und in der axialen Öffnung des Turbinengehäuses aufgenommen ist, aufweist, wobei das Turbinengehäuse einen Abgaseinlass zum Aufnehmen von Abgas, eine im Allgemeinen ringförmige Kammer (28), die ausgelegt ist, Abgas von dem Abgaseinlass aufzunehmen, eine Düse, die ausgelegt ist, Abgas von der Kammer im Allgemeinen radial einwärts zu dem Turbinenrad zuzuführen, definiert, wobei Abgas im Betrieb von dem Turbinengehäuse über die axiale Öffnung abgegeben wird;
ein mittleres Gehäuse (50), das zwischen der Verdichtergehäuseanordnung und dem Turbinengehäuse angeordnet ist, wobei das mittlere Gehäuse ein oder mehrere Lager für die Welle aufnimmt; und
einen Elektromotor (40), der einen im Allgemeinen ringförmigen Motorständer (44) aufweist, der einen Motorläufer (42) konzentrisch umgibt, wobei der Motorläufer an der Welle befestigt ist, wobei durch Erregen des Elektromotors der Motorläufer derart angetrieben wird, dass er das Turbinenrad dabei unterstützt, den zweistufigen Reihenverdichter drehend anzutreiben, wobei:
die Verdichtergehäuseanordnung ein erstes Verdichtergehäuse (16a), das das erste Laufrad aufnimmt und den ersten Diffusor definiert, und ein separat ausgebildetes zweites Verdichtergehäuse (16b), das das zweite Laufrad aufnimmt und den zweiten Diffusor definiert, aufweist,
**dadurch gekennzeichnet, dass**
der Elektromotor zwischen dem ersten Verdichtergehäuse und dem zweiten Verdichtergehäuse angeordnet ist.

2. Turbolader nach Anspruch 1, wobei der Elektromotor ein Motorgehäuse (46) aufweist, das den Motorständer und den Motorläufer aufnimmt, wobei das Motorgehäuse an dem ersten Verdichtergehäuse und an dem zweiten Verdichtergehäuse angebracht ist.

3. Turbolader nach Anspruch 2, wobei das Motorgehäuse Kühldurchlässe (48) zum Umwälzen eines flüssigen Kühlmittels dadurch zum Kühlen des Elektromotors definiert.

4. Turbolader nach Anspruch 1, wobei das erste Verdichtergehäuse und das erste Laufrad derart angeordnet sind, dass Luft in einer ersten axialen Richtung in das erste Laufrad eintritt, und das zweite Verdichtergehäuse und das zweite Laufrad derart angeordnet sind, dass Luft in einer zweiten axialen Richtung, die der ersten axialen Richtung entgegengesetzt ist, in das zweite Laufrad eintritt.

5. Turbolader nach Anspruch 1, wobei die abgasbetriebene Turbine eine verstellbare Düsenanordnung aufweist.

6. Turbolader nach Anspruch 5, wobei die verstellbare Düsenanordnung eine Reihe von in der Düse angeordneten Schaufeln (32) aufweist, wobei der Winkel der Schaufeln variabel einstellbar ist, um den Abgasstrom in das Turbinenrad zu regeln.

## Revendications

1. Turbocompresseur (10), comprenant:
un compresseur à deux étages en série (12) comprenant un l'ensemble de carter de compresseur (16), et une roue de compresseur (14) comprenant une première hélice (14a) et une seconde hélice (14b) qui sont montées sur un arbre afin de tourner avec celui-ci, les première et seconde hélices étant contenues dans l'ensemble de carter de compresseur, l'ensemble de carter de compresseur définissant un premier chemin d'écoulement de compresseur comportant une première entrée d'air (13a) qui conduit l'air dans la première hélice, une première volute (15a) qui récupère l'air comprimé qui est passé à travers et a été comprimé par la première hélice en fonctionnement, un second chemin d'écoulement de compresseur comportant une seconde entrée d'air (13b) qui conduit l'air dans la seconde hélice, et une seconde volute (15b) qui récupère l'air comprimé qui est passé à travers et a été comprimé par la deuxième hélice en fonctionnement, et comprenant en outre un conduit inter-étage (16i) qui connecte la première volute à la seconde entrée d'air de telle sorte que, lors du fonctionnement, l'air comprimé par la première hélice soit amené par le conduit inter-étage à partir de la première volute dans la seconde entrée d'air et soit en outre comprimé davantage par la seconde hélice et délivré dans la seconde volute;
une turbine entraînée par les gaz d'échappement (22) comprenant un carter de turbine (26) qui définit un alésage axial dans celle-ci et une roue de turbine (24) fixée à l'arbre et contenue dans l'alésage axial du carter de turbine, le carter de turbine définissant une entrée de gaz d'échappement pour recevoir du gaz d'échappement, une chambre essentiellement annulaire (28) agencée de manière à recevoir du gaz d'échappement en provenance de l'entrée de gaz d'échappement, une buse agencée de manière à transmettre le gaz d'échappement en provenance de la chambre essentiellement radialement vers l'intérieur à la roue de turbine, le gaz d'échappement étant déchargé, lors du fonctionnement, hors du carter de turbine par l'intermédiaire de l'alésage axial;
un boîtier central (50) disposé entre l'ensemble de carter de compresseur et le carter de turbine, le boîtier central contenant un ou plusieurs palier(s) pour l'arbre; et
un moteur électrique (40) comprenant un stator de moteur essentiellement annulaire (44) qui entoure de façon concentrique un rotor de moteur (42), le rotor de moteur étant fixé à l'arbre, dans lequel l'excitation du moteur électrique entraîne de façon rotative le rotor de moteur de manière à aider la roue de turbine à entraîner de façon rotative le compresseur à deux étages en série,
dans lequel l'ensemble de carter de compresseur comprend un premier carter de compresseur (16a) qui contient la première hélice et qui définit la première volute, et un second carter de compresseur formé séparément (16b) qui contient la seconde hélice et qui définit la seconde volute,
**caractérisé en ce que** le moteur électrique est disposé entre le premier carter de compresseur et le second carter de compresseur.

2. Turbocompresseur selon la revendication 1, dans lequel le moteur électrique comprend un carter de moteur (46) qui contient le stator de moteur et le rotor de moteur, le carter de moteur étant attaché au premier carter de compresseur et au second carter de compresseur.

3. Turbocompresseur selon la revendication 2, dans lequel le carter de moteur définit des passages d'agent de refroidissement (48) pour faire circuler un agent de refroidissement liquide à travers ceux-ci dans le but de refroidir le moteur électrique.

4. Turbocompresseur selon la revendication 1, dans lequel le premier carter de compresseur et la première hélice sont agencés de telle sorte que l'air entre dans la première hélice dans une première direction axiale, et le second carter de compresseur et la seconde hélice sont agencés de telle sorte que l'air entre dans la seconde hélice dans une seconde direction axiale qui est opposée à la première direction axiale.

5. Turbocompresseur selon la revendication 1, dans lequel la turbine entraînée par les gaz d'échappement comprend un ensemble de buse variable.

6. Turbocompresseur selon la revendication 5, dans lequel l'ensemble de buse variable comprend un réseau d'aubes (32) disposées dans la buse, les aubes étant variables afin de régler l'angle de régulation de l'écoulement de gaz d'échappement dans la roue de turbine.
